# EUROPEAN PATENT APPLICATION

(11) **EP 4 597 208 A1**
(43) Date of publication of application: **06.08.2025**
(21) Application number: 23872211.0
(22) Date of filing: 22.09.2023
(51) Int. Cl.: G02B 30/56, H04N 13/302, H04N 13/361, H04N 13/363

(54) **AERIAL IMAGE DISPLAY APPARATUS**

(30) Priority: 29.09.2022 JP 2022157042; 31.01.2023 JP 2023013297
(71) Applicant: Kyocera Corporation, Kyoto-shi, Kyoto 612-8501 (JP)
(72) Inventor: TADAUCHI, Ryo, Kyoto-shi, Kyoto 612-8501 (JP); SHIMOSE, Kazuki, Kyoto-shi, Kyoto 612-8501 (JP); KAWANISHI, Hiroyoshi, Kyoto-shi, Kyoto 612-8501 (JP)
(74) Representative: TBK
(86) International application number: PCT/JP2023/034599
(87) International publication number: WO 2024/070986

(57) **Abstract**

An aerial image display device includes a display, an optical system that forms an aerial image as a real image from image light emitted from the display, a light-transmissive screen between the aerial image and the optical system, and an image projector that emits projection image light toward the light-transmissive screen in a direction different from an optical axis direction of the image light between the aerial image and the optical system. The light-transmissive screen transmits the image light and diffuses the projection image light to display a projection image.

## Description

### TECHNICAL FIELD

The present disclosure relates to an aerial image display device that simultaneously displays an aerial image and a projection image.

### BACKGROUND OF INVENTION

A known aerial image display device is described in, for example, Patent Literature 1. This known aerial image display device includes a display panel including a display area for displaying a two-dimensional (2D) image that is alternately switchable between a transparent state in which a 2D image is not displayed and an opaque state in which a 2D image is displayed, and a stereoscopic projection device that is located adjacent to a rear surface of the display panel and projects a stereoscopic projection image to a position overlapping the display area of the display panel as viewed from the front. The known aerial image display device places a portion of the display panel overlapping at least a stereoscopic projection image into the transparent state to display the stereoscopic projection image. The known aerial image display device alternately switches between the opaque state in which a 2D image is displayed and the transparent state in which a stereoscopic projection image is displayed in a short time to allow the 2D image and the stereoscopic projection image to be viewed at the same time.

### CITATION LIST

### PATENT LITERATURE

Patent Literature 1: Japanese Unexamined Patent Application Publication No. 2016-45424

### SUMMARY

In an aspect of the present disclosure, an aerial image display device includes a first light emitter, an optical system, an optical member, and a second light emitter. The optical system forms an aerial image as a real image from first light emitted from the first light emitter. The optical member is between the aerial image and the optical system. The second light emitter emits second light toward the optical member in a direction different from an optical axis direction of the first light between the aerial image and the optical system. The optical member has a higher transmittance for the first light than for the second light.

### BRIEF DESCRIPTION OF THE DRAWINGS

The objects, features, and advantages of the present disclosure will become more apparent from the following detailed description and the drawings.
FIG. 1 is a cross-sectional view of an aerial image display device according to one embodiment of the present disclosure.
FIG. 2A is a flowchart of an operation of a controller in an aerial image display device according to one embodiment of the present disclosure.
FIG. 2B is a flowchart of an operation of a controller in an aerial image display device according to another embodiment of the present disclosure.
FIG. 3 is a perspective view of an example display performed by an aerial image display device according to one embodiment of the present disclosure.
FIG. 4 is an enlarged partial cross-sectional view of a light-transmissive screen in an aerial image display device according to one embodiment of the present disclosure, describing its function.

### DESCRIPTION OF EMBODIMENTS

In the structure with a known technique described in Patent Literature 1, a portion of the display area overlapping at least a stereoscopic projection image is placed in the transparent state to display the stereoscopic projection image. Thus, when the stereoscopic projection image is displayed, internal components such as a reflective mirror located behind the stereoscopic projection image may be viewed through the transparent portion. The internal components that are viewed from outside may be in the field of view of the eyes of a viewer, causing the stereoscopic projection image to be less viewable. In addition, the focus of the eyes of the viewer may shift from the stereoscopic projection image, thus possibly lowering the display quality of the stereoscopic projection image.

A liquid crystal display (LCD) device including a backlight as a display device for displaying a two-dimensional (2D) image with the known technique described in Patent Literature 1 is likely to have a postcard effect, with which, for example, an image (also referred to as a postcard image) formed with gray backlight with a low degree of blackness appears to be raised in a black 2D projection image. In this case, the postcard image may be in the field of view of the eyes of the viewer, causing the stereoscopic projection image to be less viewable. In addition, the contrast between the 2D projection image and the stereoscopic projection image may decrease, causing the stereoscopic projection image to be far less viewable and possibly lowering the display quality of the stereoscopic projection image.

Thus, aerial image display devices that have been awaited cause no internal components to be viewed from outside, reduce the postcard effect, and can display an aerial image with high image quality.

An aerial image display device according to one or more embodiments of the present disclosure will now be described with reference to the accompanying drawings.

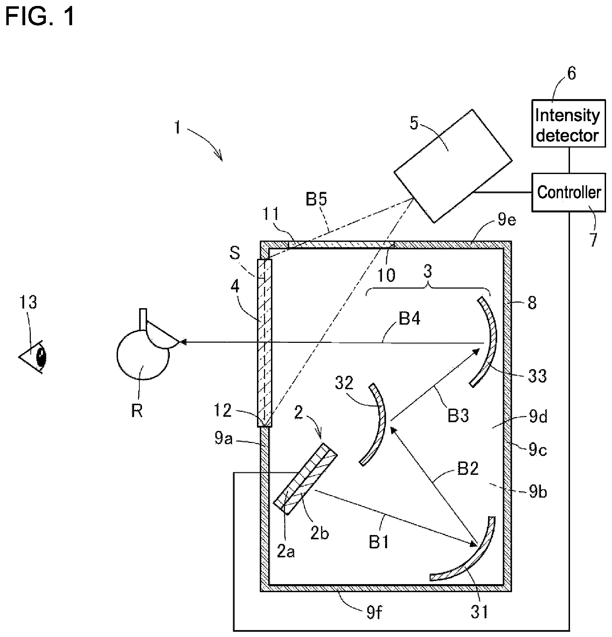

FIG. 1 is a cross-sectional view of an aerial image display device according to one embodiment of the present disclosure. In the present embodiment, an aerial image display device 1 includes a display 2 as a first light emitter. The first light emitter may include a single light source or multiple light sources. The first light emitter may be the display 2 that displays, for example, full-color videos or images. The first light emitter may also be, for example, an instruction device that indicates, for example, directions, a sign device that displays, for example, symbols and traffic signs, a signal device that displays, for example, traffic signals, or a warning device that displays warning light.

The aerial image display device 1 includes an optical system 3 that forms, from image light B1, B2, B3, or B4 emitted from the display 2 as first light, an aerial image R as a real image. The first light may be monochromatic light (light with a single wavelength) or light including multiple colors of light (e.g., red, green, and blue light serving as the primary colors of light). The optical system may be a reflective optical system including reflective mirrors, and may include reflective mirrors and a condenser (e.g., a condenser lens such as a Fresnel lens). The optical system may include reflective mirrors and a holographic element.

The aerial image display device 1 includes a light-transmissive screen 4 as an optical member between the aerial image R and the optical system 3, and an image projector 5 that emits projection image light B5 toward the light-transmissive screen 4 in a direction different from the optical axis direction of the image light B4 between the aerial image R and the optical system 3. The optical member may be the light-transmissive screen 4 that includes a light diffuser and diffuses the projection image light B5 that is second light with the light diffuser to cause a projection image to be projected. A range of values referred to herein as one value to another value intends to mean the two values being inclusive.

The optical member has a higher transmittance for the image light B1, B2, B3, or B4 than for the projection image light B5. The optical member may have a transmittance (total luminous transmittance or visible light transmittance) of, but is not limited to, about 10 to 95%, about 30 to 95%, or about 50 to 90%. The total luminous transmittance is expressed as the ratio (%) of the total light transmitted to one surface of the optical member to incident light incident on the other surface at an angle of incidence of 0°. The total luminous transmittance is measured with, for example, the method described in JIS K 7361:1997 (ISO 1346-1:1996). More specifically, the method includes placing the optical member at an entrance opening and an optical sensor at an exit opening in a hollow spherical integrating sphere, and measuring light transmitted through the optical member with the optical sensor. The entrance opening and the exit opening face each other in the integrating sphere.

The optical member may be a liquid crystal shutter (liquid crystal window or LCW) containing liquid crystal polymers. In this case, the light transmittance and the light diffusibility of the optical member can be controlled by controlling a voltage applied to the liquid crystal shutter as an intermediate voltage other than an off voltage (a voltage to block light). This allows an aerial image and a projection image projected on the optical member with the projection image light B5 to be displayed, and also allows control of, for example, the luminance of the aerial image and the projection image. The liquid crystal shutter may have a transmittance (total luminous transmittance or visible light transmittance) of, but is not limited to, about 10 to 95%, about 30 to 95%, or about 50 to 90%. The total luminous transmittance is expressed as the ratio (%) of the total light transmitted to one surface of the liquid crystal shutter to incident light incident on the other surface at an angle of incidence of 0°. The total luminous transmittance is measured with, for example, the method described in JIS K 7361:1997 (ISO 1346-1:1996). More specifically, the method includes placing the liquid crystal shutter at the entrance opening and the optical sensor at the exit opening in the hollow spherical integrating sphere, and measuring light transmitted through the liquid crystal shutter with the optical sensor. The entrance opening and the exit opening face each other in the integrating sphere.

The image projector 5 that is a second light emitter may include a single light source or multiple light sources. The projection image light B5 that is the second light may be monochromatic light (light with a single wavelength) or light including multiple colors of light (e.g., red, green, and blue light serving as the primary colors of light). The second light emitter may be a display that displays, for example, full-color videos or images, or may be an instruction device that indicates directions, a sign device that displays symbols and traffic signs, a signal device that displays, for example, traffic signals, or a warning device that displays warning light.

The light-transmissive screen 4 has a higher transmittance for the image light B1, B2, B3, or B4 than for the projection image light B5. The light-transmissive screen 4 transmits a large portion of the image light B1, B2, B3, or B4. The light-transmissive screen 4 does not transmit a large portion of the projection image light B5 and diffuses the large portion of the projection image light B5. Thus, on the light-transmissive screen 4, an image formed with the image light B1, B2, B3, or B4 is mostly not displayed, but the projection image formed with the projection image light B5 is projected.

The light-transmissive screen 4 may include a light-transmissive member (light-transmissive film) including a light diffuser such as light diffusing particles. The light-transmissive screen 4 may include a light-transmissive film stacked on a light-transmissive substrate (e.g., a glass substrate or a plastic substrate). The light-transmissive film is a rectangle with each side having a length of about 1000 to 1500 mm in a plan view, and has a thickness of about 10 µm to 1 mm (e.g., 100 µm). The light-transmissive film (optical member) may have a transmittance (total luminous transmittance or visible light transmittance) of, but is not limited to, about 10 to 95%, about 30 to 95%, or about 50 to 90%. The total luminous transmittance is expressed as the ratio (%) of the total light transmitted to one surface of the light-transmissive film to incident light incident on the other surface at an angle of incidence of 0°. The total luminous transmittance is measured with, for example, the method described in JIS K 7361:1997 (ISO 1346-1:1996). More specifically, the method includes placing the light-transmissive film at the entrance opening and the optical sensor at the exit opening in the hollow spherical integrating sphere, and measuring light transmitted through the light-transmissive film with the optical sensor. The entrance opening and the exit opening face each other in the integrating sphere. The total luminous transmittance of the light-transmissive screen 4 may be measured for the light-transmissive film alone or may be measured with the light-transmissive film bonded to and stacked on the glass substrate (with a visible light transmittance of about 90%) or the plastic substrate (with a visible light transmittance of about 87 to 93%). The transmittance of the light-transmissive screen 4 can be adjusted by changing the number of stacked light-transmissive films.

The optical member may have a haze of, but is not limited to, about 3 to 98%, 3 to 50%, or 4 to 30%. The haze is expressed as the ratio (%) of light transmitted while deviating by 0.044 rad (2.5°) or greater from the optical axis of incident light due to forward scattering to light incident on one surface of the optical member and transmitted to the other surface. The haze is measured with, for example, a method described in JIS K 7136:2000 (ISO 14782:1999). More specifically, the method includes placing the optical member at the entrance opening and the optical sensor at the exit opening in the integrating sphere, and measuring, with the optical sensor, light transmitted through the optical member and deviating from the optical axis of the incident light. For the optical member that is a light-transmissive screen or a liquid crystal shutter as well, the haze can be measured with the same method as described above.

The light-transmissive screen 4 in the aerial image display device 1 has a higher transmittance for the first light (image light B1, B2, B3, or B4) than for the second light (projection image light B5). The light-transmissive screen 4 thus transmits a large portion of the first light and diffuses a large portion of the second light to display the projection image. The aerial image display device 1 with the above structure produces the effects described below. The aerial image display device 1 displays the aerial image R with a projection image S displayed on the light-transmissive screen 4. This causes internal components such as a third reflective mirror 33 to be less likely to be viewed by the viewer, thus reducing the likelihood that the internal components being in the field of view of eyes 13 of the viewer causes the viewer to view the aerial image R less easily. In addition, the aerial image R is displayed with the projection image S displayed behind the aerial image R. The aerial image display device 1 thus reduces the postcard effect with the projection image S, reducing the likelihood that the postcard image is viewed by the viewer. The aerial image display device 1 can thus display the aerial image R with high image quality.

The aerial image display device 1 may include an intensity detector 6 that detects ambient light intensity, and a controller 7 that performs feedback control (hereafter also referred to as control) on the display 2 to increase the luminance of the aerial image R in response to an increase in a detection value from the intensity detector 6 and that performs feedback control on the display 2 to reduce the luminance of the aerial image R in response to a decrease in the detection value. More specifically, the controller 7 performs positive feedback control for the luminance of the aerial image R based on the detection value from the intensity detector 6. In this structure, the luminance of the aerial image R is increased in response to an in increase in the ambient light intensity, or in other words, in response to the environment becoming brighter. The luminance of the aerial image R is reduced in response to a decrease in the ambient light intensity, or in other words, in response to the environment becoming darker. This reduces the likelihood that ambient light causes the viewer to view the aerial image R less easily. The intensity detector 6 may be a commercially available illuminometer used in, for example, a camera. To detect the ambient light intensity, the intensity detector 6 may be located at, for example, a position in the aerial image display device 1 affected by sunlight, or for example, on a top plate 9e (described later).

The aerial image display device 1 further includes, for example, a hollow rectangular housing 8. The housing 8 includes four side walls 9a to 9d forming a rectangular prism, a top plate 9e perpendicularly connected to edges of the side walls 9a to 9d to close one of the openings of the rectangular prism formed by the side walls 9a to 9d, and a bottom plate 9f perpendicularly connected to edges of the side walls 9a to 9d to close the other opening of the rectangular prism formed by the side walls 9a to 9d.

The top plate 9e includes a first through-hole 10. A transparent first light-transmissive plate 11 is fitted in and fixed to the first through-hole 10. The first light-transmissive plate 11 transmits the projection image light B5 projected from the image projector 5 to the light-transmissive screen 4 and also prevents foreign matter such as rainwater or dust from entering the housing 8. The housing 8 described above is made of a highly light-blocking and rigid material such as a metal or a synthetic resin. The housing 8 accommodates, for example, the display 2 and the optical system 3. The housing 8 blocks external light and also prevents foreign matter from entering the display 2 and an optical path of the optical system 3.

Of the four side walls 9a to 9d described above, the side wall 9a at the front, or in other words, adjacent to the viewer, includes a second through-hole 12. The light-transmissive screen 4 described above is fitted in and fixed to the second through-hole 12. The light-transmissive screen 4 displays the projection image S from the image projector 5 and also blocks foreign objects such as dust from entering the housing 8.

As described above, the controller 7 performs feedback control on the display 2 to increase the luminance of the aerial image R in response to an increase in the detection value of the ambient light detected by the intensity detector 6, and performs feedback control on the display 2 to reduce the luminance of the aerial image R in response to a decrease in the detection value. The luminance of the aerial image R may be controlled by, for example, changing a luminance value of an image signal from the display 2 to a preset luminance value based on the detection value of the ambient light. More specifically, intensity data about the ambient light and luminance data about the image signal corresponding to the intensity data are stored into a storage, such as an integrated circuit (IC) or a large-scale integration (LSI) circuit, in a drive element included in a drive such as a drive circuit in the display 2 or into a storage such as a memory circuit (a memory or a register) included in the drive. The intensity data about the ambient light may include current values or voltage values corresponding to detection values of the intensity converted to binary signals such as digital signals. Similarly, the luminance data about the image signal may include current values or voltage values corresponding to luminance values converted to binary signals such as digital signals. When the intensity detector 6 detects the ambient light intensity, the controller 7 refers to the intensity data and the luminance data in the storage and determines the intensity data and the luminance data corresponding to the detection value based on the detection value of the ambient light intensity. The controller 7 uses the determined luminance data to control the luminance value of the display 2. The controller 7 may be included in the drive in the display 2 or may be external to the display 2 as illustrated in FIG. 1.

The controller 7 controls the luminance of the aerial image R based on the detection value of the ambient light intensity detected by the intensity detector 6 with the specific methods described below. A first method is to control a contrast ratio between the luminance of an aerial image and the luminance of ambient light reflecting the ambient light intensity (luminance), or in other words, ambient contrast ratio (ACR), to be within a predetermined range. The ACR is expressed by a formula (ADSon + ABL)/(ADSoff + ABL). ADSon is the luminance of the aerial image R when white is displayed on the entire screen of the display 2 (e.g., an LCD device), and ADSoff is the luminance of the aerial image R when black is displayed on the entire screen of the LCD device that is the display 2. ABL is expressed by (Ab × R1) + (Ab × T2 × R2), where Ab is the luminance of ambient light, R1 is the reflectance of the light-transmissive screen 4, and (Ab × R1) represents the intensity of ambient light reflected from the light-transmissive screen 4 and entering the eyes 13 of the viewer. T is the transmittance of the light-transmissive screen 4, R2 is the reflectance of the third reflective mirror 33, and (Ab × T2 × R2) represents the intensity of ambient light transmitted through the light-transmissive screen 4, reflected from the third reflective mirror 33, transmitted through the light-transmissive screen 4 again, and entering the eyes 13 of the viewer.

The ACR being 3 allows recognition of the aerial image R. The ACR being 5 allows proper viewing of the aerial image R. The ACR being greater than or equal to 10 allows easy viewing of the aerial image R. ADSon is thus controlled to cause the ACR to be greater than or equal to 3. For the LCD device, for example, the luminance (an input power value or an input current value) of a backlight may be controlled. ADSon may be controlled to cause the ACR to be greater than or equal to 5 or may be controlled to cause the ACR to be greater than or equal to 10. The upper limit of the ACR may be 20 or 15. The ACR is not limited to the above values.

A second method is to detect the luminance of the aerial image R with, for example, an optical sensor and change, based on the detection value of the ambient light intensity, the luminance value of a backlight 2a in the LCD device that is the display 2. The intensity of indoor ambient light is about 100 to 1200 lux, and the luminance of the aerial image R is about 200 to 500 lux. The luminance of a display image on the LCD device is about 400 to 1200 lux, and a liquid crystal panel has a light transmittance of about 5%. The optical system 3 has a light transmittance of about 80%. The luminance of the backlight 2a is about 8000 to 24000 lux. For example, when the ambient light intensity increases by 100 lux and the luminance of the aerial image R is to be increased accordingly by 100 lux, the luminance of the backlight 2a is increased by about 2500 lux (100 × (1/0.8) × (1/0.05)). With the transmittance of the light-transmissive screen 4 included in the light transmittance (about 80%) of the optical system 3, the optical system 3 may have a light transmittance of 80% × (the transmittance of the light-transmissive screen 4). The light-transmissive screen 4 may have a transmittance of, but is not limited to, about 10 to 95%. ΔL2/ΔL1 = 0.1 to 5, ΔL2/ΔL1 = 0.3 to 3, or ΔL2/ΔL1 = 0.5 to 1.5 may be satisfied, where ΔL1 is an increase in the ambient light intensity, and ΔL2 is an increase in the luminance of the aerial image R based on the increase in the ambient light intensity. The value of ΔL2/ΔL1 is not limited to these ranges.

Detection of the ambient light intensity may be performed by the intensity detector 6, and control of the luminance value of the display 2 may be performed by the controller 7 in cycles of 30 Hz or greater or in cycles of 60 Hz or greater. This reduces the likelihood that the viewer views changes in the luminance value of the display 2, or for example, flickering of the aerial image R.

The display 2 includes the backlight 2a and a transmissive display device 2b. The transmissive display device 2b may be a transmissive LCD device that transmits light from the backlight 2a and displays an image based on the orientation of liquid crystals included in each of multiple pixels.

The LCD device may include a known liquid crystal panel. The known liquid crystal panel may be an in-plane switching (IPS) panel, a fringe field switching (FFS) panel, a vertical alignment (VA) panel, an electrically controlled birefringence (ECB) panel, or any of various other liquid crystal panels. The liquid crystal panel may include a first polarizing plate, a color filter substrate, a liquid crystal layer, an array substrate, and a second polarizing plate. The first polarizing plate may be located adjacent to a display surface of the display device.

The controller 7 may perform feedback control on the image projector 5 to increase the luminance of the projection image S in response to an increase in the luminance of the aerial image R, to reduce the luminance of the projection image S in response to a decrease in the luminance of the aerial image R, and to cause the intensity (luminance) of postcard image light from the backlight 2a to be less than or equal to a predetermined value relative to the intensity (luminance) of the projection image light B5. The postcard image light is generated by the postcard effect, with which, for example, an image formed with gray backlight with a low degree of blackness, or a postcard image, appears to be raised in the black projection image S.

The predetermined value for the intensity of the postcard image light relative to the intensity of the projection image light B5 (in candela or lux) (although the intensity of the projection image light B5 may be an average intensity of the entire image) may be, in a signal-to-noise ratio, less than or equal to -20 dB (1/10), less than or equal to -30 dB (1/-31.6), less than or equal to -35 dB (1/56.2), or -40 dB (1/100). For example, a detection value (also referred to as a first detection value) of the intensity of the projection image light B5 detected with an optical sensor may be compared with a detection value (also referred to as a second detection value) of the intensity of the postcard image light detected with an optical sensor to control the intensity of the projection image light B5 or the intensity of the backlight 2a to cause the value of (the second detection value)/(the first detection value) to be, for example, less than or equal to -20 dB (1/10). An input power value of the image projector 5 may be controlled to control the intensity of the projection image light B5. An input power value of the backlight 2a may be controlled to control the intensity of the backlight 2a.

The controller 7 may include one or more processors. The processors may include a general-purpose processor that reads a specific program to perform a specific function and a processor dedicated to specific processing for displaying the aerial image R together with the projection image S. The dedicated processor may include an application-specific integrated circuit (ASIC). The processors may include a programmable logic device (PLD). The PLD may include a field-programmable gate array (FPGA). The controller 7 may be either a system on a chip (SoC) or a system in a package (SiP) in which one or more processors cooperate with other components.

The optical system 3 includes a first reflective mirror 31 that reflects the image light B1 emitted from the display 2 to generate the image light B2 as reflected light, a second reflective mirror 32 that reflects the image light B2 reflected from the first reflective mirror 31 to generate the image light B3 as reflected light, and the third reflective mirror 33 that reflects the image light B3 reflected from the second reflective mirror 32 to generate the image light B4 as reflected light. The first reflective mirror 31 and the third reflective mirror 33 may be concave mirrors, and the second reflective mirror 32 may be a convex mirror. The concave mirrors and the convex mirror may include aspherical reflective surfaces, rather than spherical reflective surfaces. The first reflective mirror 31, the second reflective mirror 32, and the third reflective mirror 33 may be freeform mirrors, rather than the concave mirrors and the convex mirror described above.

The light-transmissive screen 4 transmits the image light B4 that forms the aerial image R and diffuses the projection image light B5 for the projection image S, and can thus allow the real aerial image R as a real image to be displayed in a space in front of the light-transmissive screen 4 while displaying the projection image S on the display surface of the light-transmissive screen 4.

The light-transmissive screen 4 may include, for example, a light-transmissive resin film with a thickness of 0.1 µm to 20 mm or a light-transmissive resin layer including a light diffuser. A resin material for the light-transmissive resin film or the light-transmissive resin layer may be, for example, an acrylic resin, a silicone resin, a polycarbonate resin, an epoxy resin, or a polyethylene terephthalate (PET) resin. The light diffuser may include, for example, light diffusing particles. The material for the light diffuser may be, for example, titanium oxide, silicon oxide, aluminum oxide, or glass. To project the projection image light B5 from the image projector 5 onto the light-transmissive screen 4, the projection image light B5 is to be scattered to form the projection image S. However, scattering causes the projection image S to be less transparent. To satisfy these opposite properties, nanoparticle dispersion is used to cause the light diffusing particles to have an average particle diameter of nanometer order and also to optimize the content and dispersion of the light diffusing particles. Scattering of light includes geometric scattering, Mie scattering, and Rayleigh scattering. Mie scattering with high color reproducibility is used for the light-transmissive screen 4. The average particle diameter of the light diffusing particles is adjusted to optimize the intensity of scattered light and light distribution balance. The light diffusing particles may have an average particle diameter of, but is not limited to, about 10 to 500 nm. The content of the light diffusing particles may be, but not limited to, about 3 to 30 vol%. For example, KALEIDO SCREEN (registered trademark) manufactured by ENEOS Corporation may be used as the light-transmissive resin film for the light-transmissive screen 4.

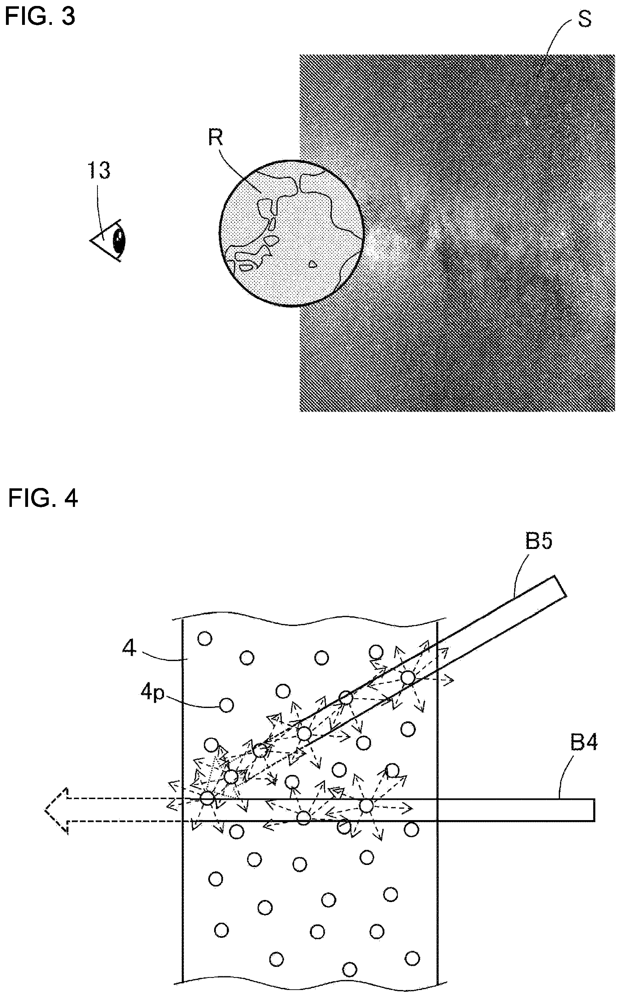

FIG. 4 is an enlarged partial cross-sectional view of the light-transmissive screen 4 describing its function. The light-transmissive screen 4 transmits the image light B4 and diffuses the projection image light B5 to display the projection image S. More specifically, the light-transmissive screen 4 is at a position at which the light-transmissive screen 4 is thicker in the optical axis direction of the projection image light B5 than in the optical axis direction of the image light B4. Thus, the image light B4 has a low probability of being scattered by light diffusing particles 4p, and a large portion of the image light B4 thus passes through the light-transmissive screen 4. The projection image light B5 has a high probability of being scattered by the light diffusing particles 4p, and a large portion of the projection image light B5 is thus scattered by the light-transmissive screen 4 to form the projection image S. In FIG. 4, the image light B4 is incident on a surface of the light-transmissive screen 4 substantially perpendicularly and passes through substantially the thinnest portion in thickness. The projection image light B5 is obliquely incident on the surface of the light-transmissive screen 4, enters a thicker portion, and is mostly scattered.

An angle (intersection angle) formed between the optical axis of the image light B4 and the optical axis of the projection image light B5 may be, but not limited to, about 10 to 60° or about 20 to 45°.

The light-transmissive screen 4 may include a light-transmissive member stacked on a light-transmissive substrate. The light-transmissive substrate may be, for example, a glass substrate or a plastic substrate. The light-transmissive member may be, for example, a light-transmissive resin film or a light-transmissive resin layer. A resin material for the light-transmissive resin film or the light-transmissive resin layer may be, for example, an acrylic resin, a silicone resin, a polycarbonate resin, an epoxy resin, or a PET resin. The light-transmissive resin layer may be an application layer formed by applying an uncured resin material to the light-transmissive base and curing the resin material using at least one of heat or ultraviolet light. In this case, the light-transmissive screen 4 has a higher strength. In addition, this structure facilitates adjustment of the thickness of the light-transmissive member, and thus facilitates adjustment of the diffusibility of the light-transmissive screen 4, or more specifically, the imaging performance for the projection image S and the transmittance for the image light B4.

The light-transmissive member may include a light diffuser entirely or locally dispersed uniformly in the light transmissive member. When the light diffuser is entirely and uniformly dispersed in the light-transmissive member, the projection image S can be projected on the entire light-transmissive screen 4, thus effectively reducing the likelihood that the internal components and the postcard image are viewed from outside. When the light diffuser is locally and uniformly dispersed in the light-transmissive member, the projection image S can be projected on, for example, a portion of the light-transmissive screen 4 in which the internal components and the postcard image are easily viewed from outside.

For example, the display 2 that is the first light emitter is a display device such as an LCD device, the second light emitter is the image projector 5 that causes the light-transmissive screen 4 to display the projection image S, and the projection image S may be larger than the aerial image R as illustrated in FIG. 3. In this case, the projection image S is more likely to be viewed as a background image of the aerial image R, and thus the aerial image R is more likely to be viewed as, to the eyes 13 of the viewer, popping up toward the viewer. The aerial image R is thus more likely to be viewed as a stereoscopic image (three-dimensional image). The size (e.g., the area) of the projection image S may be, but not limited to, more than one times and about ten times or less the size (e.g., the area) of the aerial image R.

The aerial image R may have higher luminance than the projection image S. In this case, the projection image S is more likely to be viewed as the background image of the aerial image R, and thus the aerial image R is more likely to be viewed as, to the eyes 13 of the viewer, further popping up toward the viewer. The luminance of the aerial image R may be, but not limited to, more than one times and about ten times or less the luminance of the projection image S.

The aerial image R may have a higher grayscale than the projection image S, or more specifically, the aerial image R may be an image with a high grayscale and the projection image S may be an image with a low grayscale. In this case, the aerial image R is more likely to be viewed as, to the eyes 13 of the viewer, further popping up toward the viewer. The grayscale of the aerial image R may be, but not limited to, more than one times and about 20 times or less the grayscale of the projection image S.

The aerial image R may have a higher resolution than the projection image S. In this case, the aerial image R is more likely to be viewed as, to the eyes 13 of the viewer, further popping up toward the viewer. The resolution of an image can be expressed with a modulation transfer function (MTF). The MTF can be used as a resolution index for comparing the resolutions of images. The MTF is a function of a spatial frequency *v* (1/mm), and is maximum at *v* = 0. The MTF may be normalized to a maximum value of 1. In this case, an MTF value closer to 1 indicates a higher resolution. An area formed by integrating the MTF at the spatial frequency axis may be used as a performance index of an image to allow highly accurate evaluation of the resolution of an image. The resolution of the aerial image R may be, but not limited to, more than one times and about five times or less the resolution of the projection image S.

When the aerial image R and the projection image S are videos, the aerial image R may have a higher moving speed than the projection image S. In this case, the aerial image R is more likely to be viewed as, to the eyes 13 of the viewer, being closer to the viewer than the projection image S. The moving speed of the aerial image R may be, but not limited to, more than one times and about ten times or less the moving speed of the projection image S.

The aerial image display device 1 may include a detector (e.g., an imaging device such as a camera) that detects the gaze direction of the eyes 13 of the viewer, and may include a controller for controlling control variables that improves at least one control variable of the luminance, the grayscale, the resolution, or the moving speed of the aerial image R when the detector detects the line of sight of the eyes 13 of the viewer being directed to the aerial image R. In this case, the aerial image R is more noticeable than the projection image S when the viewer gazes at the aerial image R. Thus, the aerial image R is more likely to be viewed as further popping up toward the viewer. The controller for controlling control variables may be included in the controller 7 or may be separate from the controller 7.

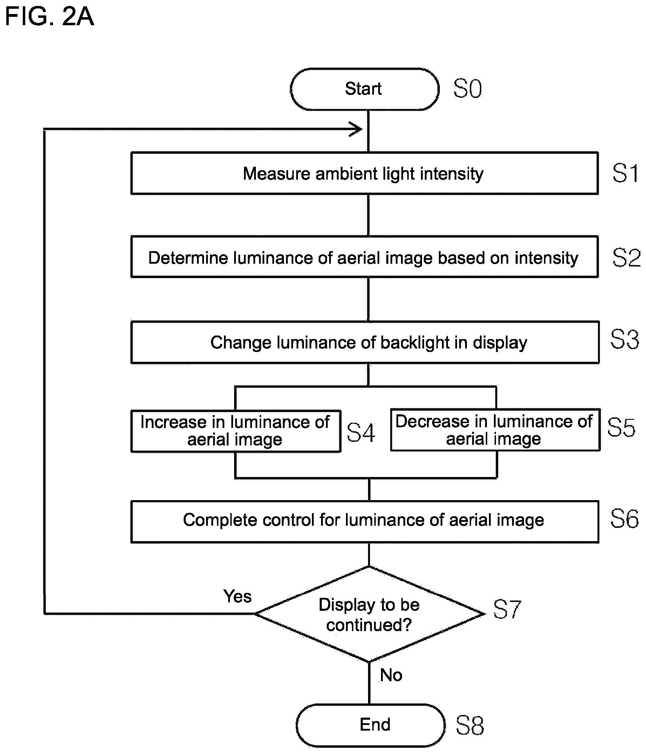

FIG. 2A is a flowchart of an operation of the controller 7 in the aerial image display device 1 according to the embodiment of the present disclosure. Processing performed by the controller 7 in the aerial image display device 1 described above will now be described. In step S0, the aerial image display device 1 is powered on, and the controller 7 is activated. The processing then advances to step S1. The intensity detector 6 measures ambient light intensity in the surroundings of the aerial image display device 1 in which the aerial image R and the projection image S are displayed, and outputs a detection value of the intensity resulting from the measurement to the controller 7. The processing then advances to step S2. The controller 7 receives the detection value of the ambient light intensity detected by the intensity detector 6 and determines a luminance value of the aerial image R corresponding to the ambient light intensity.

In step S3, the luminance value of the backlight 2a in the display 2 is changed with the first method or the second method described above.

When the luminance of the aerial image R increases in response to the change in the luminance value of the backlight 2a (step S4) or when the luminance value of the aerial image R decreases in response to the change in the luminance value of the backlight 2a (step S5), the controller 7 completes feedback control for the luminance of the aerial image R in subsequent step S6. In other words, the controller 7 completes change control for the input power value (input current value) of the backlight 2a in the LCD device.

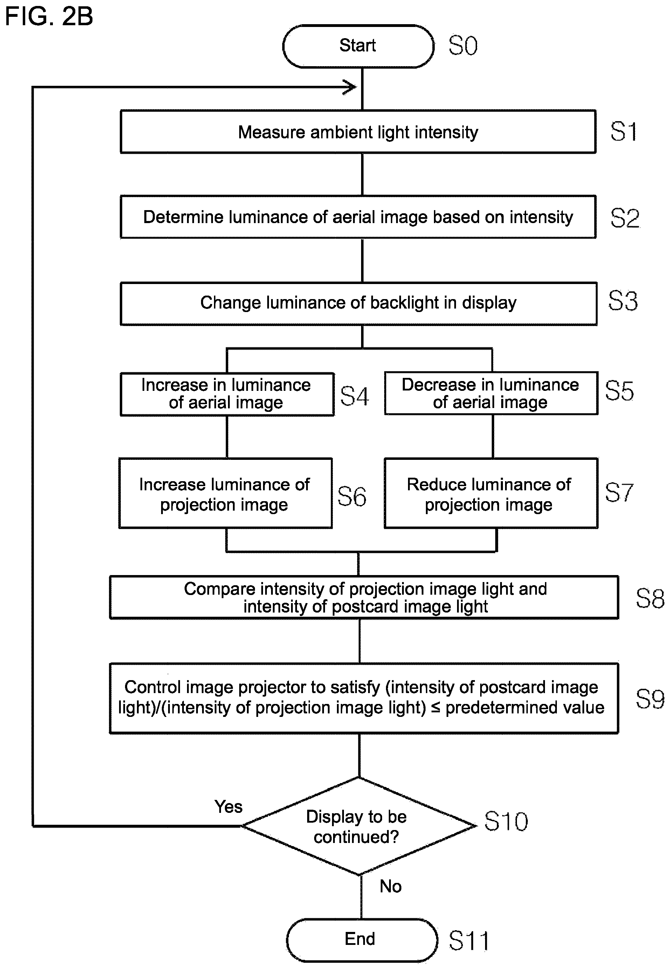

FIG. 2B is a flowchart of an operation of a controller 7 in an aerial image display device 1 according to another embodiment of the present disclosure. Steps S1 to S5 are the same as or similar to those in FIG. 2A and will not be described. When the luminance of the aerial image R increases, the luminance of the projection image S is increased in step S6. When the luminance of the aerial image R decreases, the luminance of the projection image S is reduced in step S7. For example, when the luminance of the aerial image R is increased or reduced by 100 lux, the luminance of the projection image S (although the luminance of the projection image S may be average luminance) may be increased or reduced by the same value (100 lux). Control may also be performed to cause the aerial image R and the projection image S to have a predetermined contrast ratio, or for example, a predetermined value (e.g., 3.2 or 10 dB) within a range of 1 (0 dB) ≤ (the luminance of the aerial image R)/(the luminance of the projection image S) ≤ 10 (20 dB).

In step S8, the intensity of postcard image light and the intensity of projection image light are compared. The intensity of the postcard image light and the intensity of the projection image light may be compared by detecting the postcard image light and the projection image light with, for example, optical sensors. Data about the intensity of the postcard image light corresponding to the input power value (input current value) of the backlight 2a in the LCD device may be prestored in the storage (memory) as a data table, and the intensity of the postcard image light may be determined by referring to the data table.

In step 9, the image projector 5 is controlled to cause the value of (the intensity of the postcard image light)/(the intensity of the projection image light) to be less than or equal to a predetermined value. For example, the predetermined value is controlled to be -20 dB (1/10), -30 dB (1/31.6), or -35 dB (1/56.2) in the signal-to-noise ratio as described above. Upon determining the luminance value of the projection image S, the controller 7 provides the determined luminance value to the image projector 5 as feedback, and completes rewriting of the luminance value.

Finally, when rewriting of the luminance value of the projection image S is complete and display of the aerial image R continues, or in other words, image data to be displayed continues, the processing returns to step S1 again. More specifically, rewriting of the luminance of the aerial image R and the luminance of the projection image S is repeated based on the detection value of the intensity from the intensity detector 6 until input of display image data ends. When display of the aerial image R does not continue, the processing advances to step S11 to end displaying the aerial image R and the projection image S.

FIG. 3 is a perspective view of an example display performed by the aerial image display device 1. In the present embodiment, the aerial image display device 1 displays the projection image S on the light-transmissive screen 4 with the image projector 5, and displays, with the display 2, the aerial image R in front of the light-transmissive screen 4, or more specifically, closely to the viewer. In the example in FIG. 3, the aerial image R is the earth, and the projection image S that is a background is space. An image of the earth floating in space is displayed. Displaying the projection image S reduces the likelihood that the internal components in the housing 8 are viewed by the viewer as with the known technique described above. The aerial image R and the projection image S behind the aerial image R are displayed at the same time. Thus, the motion parallax of the aerial image R and the projection image S enhances the sense of depth of the projection image S with respect to the aerial image R when the line of sight moves. This increases the stereoscopic effect and three-dimensional recognition, causing the aerial image R to appear to be floating in a space closer to the viewer.

As illustrated in FIG. 2A, the aerial image R may have the luminance controlled based on the ambient light intensity. This reduces the likelihood that the aerial image R is difficult to be viewed due to ambient light.

The luminance of the postcard image increases in response to an increase in the luminance of the aerial image R and decreases in response to a decrease in the luminance of the aerial image R. As illustrated in FIG. 2B, feedback control may also be performed for the luminance of the projection image S behind the aerial image R to reduce the likelihood that the postcard image is viewed by the viewer in outer space. In this case, an effect of the postcard image light is reduced, and the aerial image R is more likely to be viewed with the eyes 13 of the viewer. The aerial image R thus has higher display quality.

In one or more embodiments of the present disclosure, the aerial image display device may include, as a display, a self-luminous display device such as an LED device or an organic electroluminescent (EL) display device. In one or more embodiments of the present disclosure, the aerial image display device allows an operation of an aerial image without touching, and may be used in, but not limited to, products in various fields described below. Examples of such products include a communication device for communication or conversations using aerial images, a medical interview device that allows doctors to interview patients using aerial images, a navigation device and a driving control device for vehicles such as automobiles, an order reception and registration device used in, for example, shops, an operational panel used in, for example, buildings or elevators, a learning device for teaching or learning classes using aerial images, an office device for business communication or instructions using aerial images, a gaming device used for playing games using aerial images, a projector for projecting images on the ground or walls in, for example, amusement parks or game arcades, a simulation device for simulation using aerial images in, for example, universities or medical organizations, a large display for displaying prices and other information in, for example, markets or stock exchanges, and an image viewing device used for viewing aerial images.

In one or more embodiments of the present disclosure, the aerial image display device displays an aerial image with, for example, a projection image formed with the second light displayed on the optical member. This reduces the likelihood that the internal components are viewed by the viewer and thus reduces the likelihood that the viewer views the aerial image less easily. The aerial image display device can thus avoid lowering the display quality of the aerial image. In addition, the aerial image is displayed with the projection image displayed behind the aerial image. The aerial image display device thus reduces the postcard effect with, for example, the projection image, reducing the likelihood that the postcard image is viewed by the viewer. The aerial image display device can thus display the aerial image with high image quality.

The structure according to one more embodiments of present disclosure may have aspects (1) to (14) described below.
(1) An aerial image display device, comprising:
   a first light emitter;
   an optical system configured to form an aerial image as a real image from first light emitted from the first light emitter;
   an optical member between the aerial image and the optical system; and
   a second light emitter configured to emit second light toward the optical member in a direction different from an optical axis direction of the first light between the aerial image and the optical system,
   wherein the optical member has a higher transmittance for the first light than for the second light.
(2) The aerial image display device according to (1), wherein
   the optical member includes a light-transmissive member including a light diffuser.
(3) The aerial image display device according to (2), wherein
   the optical member includes a light-transmissive substrate on which the light-transmissive member is stacked.
(4) The aerial image display device according to (3), wherein
   the light diffuser is uniformly dispersed in the light-transmissive member.
(5) The aerial image display device according to (4), wherein
   the light diffuser is locally and uniformly dispersed in the light-transmissive member.
(6) The aerial image display device according to any one of (2) to (5), wherein
   the optical member is at a position at which the optical member is thicker in an optical axis direction of the second light than in the optical axis direction of the first light.
(7) The aerial image display device according to any one of (1) to (6), wherein the first light emitter is a display device,
   the second light emitter is an image projector configured to cause the optical member to display a projection image, and
   the projection image is larger than the aerial image.
(8) The aerial image display device according to (7), wherein
   the aerial image has higher luminance than the projection image.
(9) The aerial image display device according to (7), wherein
   the aerial image has a higher grayscale than the projection image.
(10) The aerial image display device according to (7), wherein
   the aerial image has a higher resolution than the projection image.
(11) The aerial image display device according to (7), wherein
   the aerial image and the projection image are videos, and the aerial image has a higher moving speed than the projection image.
(12) The aerial image display device according to any one of (1) to (11), further comprising:
   an intensity detector configured to detect ambient light intensity; and
   a controller configured to perform feedback control on the first light emitter to increase luminance of the aerial image in response to an increase in a detection value from the intensity detector and to reduce the luminance of the aerial image in response to a decrease in the detection value.
(13) The aerial image display device according to (12), wherein
   the first light emitter is a transmissive display device including a backlight,
   the second light emitter is an image projector configured to cause the optical member to display a projection image, and
   the controller is configured to perform feedback control on the image projector to increase luminance of the projection image in response to an increase in luminance of the aerial image, to reduce the luminance of the projection image in response to a decrease in the luminance of the aerial image, and to cause intensity of postcard image light from the backlight to be less than or equal to a predetermined value relative to intensity of projection image light.
(14) The aerial image display device according to (13), wherein
   the transmissive display device is a liquid crystal display device.

Although embodiments of the present disclosure have been described in detail, the present disclosure is not limited to the above embodiments, and may be changed or varied in various manners without departing from the spirit and scope of the present disclosure. The components described in the above embodiments may be entirely or partially combined as appropriate unless any contradiction arises.

### REFERENCE SIGNS

- 1: aerial image display device
- 2: display
- 2a: backlight
- 2b: transmissive display device
- 3: optical system
- 4: light-transmissive screen
- 5: image projector
- 6: intensity detector
- 7: controller
- 8: housing
- 9a to 9d: side wall
- 9e: top plate
- 9f: bottom plate
- 10: first through-hole
- 11: first light-transmissive plate
- 12: second through-hole
- 31: first reflective mirror
- 32: second reflective mirror
- 33: third reflective mirror
- B2, B1, B3, B4: image light
- B5: projection image light
- R: aerial image
- S: projection image

## Claims

1. An aerial image display device, comprising:
a first light emitter;
an optical system configured to form an aerial image as a real image from first light emitted from the first light emitter;
an optical member between the aerial image and the optical system; and
a second light emitter configured to emit second light toward the optical member in a direction different from an optical axis direction of the first light between the aerial image and the optical system,
wherein the optical member has a higher transmittance for the first light than for the second light.

2. The aerial image display device according to claim 1, wherein
the optical member includes a light-transmissive member including a light diffuser.

3. The aerial image display device according to claim 2, wherein
the optical member includes a light-transmissive substrate on which the light-transmissive member is stacked.

4. The aerial image display device according to claim 3, wherein
the light diffuser is uniformly dispersed in the light-transmissive member.

5. The aerial image display device according to claim 4, wherein
the light diffuser is locally and uniformly dispersed in the light-transmissive member.

6. The aerial image display device according to any one of claims 2 to 5, wherein
the optical member is at a position at which the optical member is thicker in an optical axis direction of the second light than in the optical axis direction of the first light.

7. The aerial image display device according to claim 1, wherein
the first light emitter is a display device,
the second light emitter is an image projector configured to cause the optical member to display a projection image, and
the projection image is larger than the aerial image.

8. The aerial image display device according to claim 7, wherein
the aerial image has higher luminance than the projection image.

9. The aerial image display device according to claim 7, wherein
the aerial image has a higher grayscale than the projection image.

10. The aerial image display device according to claim 7, wherein
the aerial image has a higher resolution than the projection image.

11. The aerial image display device according to claim 7, wherein
the aerial image and the projection image are videos, and the aerial image has a higher moving speed than the projection image.

12. The aerial image display device according to claim 1, further comprising:
an intensity detector configured to detect ambient light intensity; and
a controller configured to perform feedback control on the first light emitter to increase luminance of the aerial image in response to an increase in a detection value from the intensity detector and to reduce the luminance of the aerial image in response to a decrease in the detection value.

13. The aerial image display device according to claim 12, wherein
the first light emitter is a transmissive display device including a backlight,
the second light emitter is an image projector configured to cause the optical member to display a projection image, and
the controller is configured to perform feedback control on the image projector to increase luminance of the projection image in response to an increase in luminance of the aerial image, to reduce the luminance of the projection image in response to a decrease in the luminance of the aerial image, and to cause intensity of postcard image light from the backlight to be less than or equal to a predetermined value relative to intensity of projection image light.

14. The aerial image display device according to claim 13, wherein
the transmissive display device is a liquid crystal display device.
